(19) Europäisches Patentamt
European Patent Office
Office européen des brevets

(11) **EP 1 967 976 A2**

(12) **EUROPÄISCHE PATENTANMELDUNG**

(43) Veröffentlichungstag:
**10.09.2008 Patentblatt 2008/37**

(51) Int Cl.:
*G06F 21/00* (2006.01)     *G06F 21/20* (2006.01)

(21) Anmeldenummer: **08075093.8**

(22) Anmeldetag: **06.02.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **06.03.2007 DE 102007011309**

(71) Anmelder: **Francotyp-Postalia GmbH**
**16547 Birkenwerder (DE)**

(72) Erfinder: **Bleumer, Gerrit**
**16552 Schildow (DE)**

(74) Vertreter: **Jungblut, Bernhard Jakob et al**
**JUNGBLUT & SEUSS**
**Patentanwälte**
**Max-Dohrn-Strasse 10**
**10589 Berlin (DE)**

(54) **Verfahren zur authentisierten Übermittlung eines personalisierten Datensatzes oder programms an ein Hardware-Sicherheitsmodul, insbesondere einer Frankiermaschine**

(57)     Die Erfindung betrifft ein Verfahren zur authentisierten Übermittlung eines Datensatzes und/oder eines Programms von einem Host an ein Hardware-Sicherheitsmodul (HSM) unter Verwendung von drei verschiedenen Festcodes, wobei ein Systemhersteller an verschiedenen Fertigungsstandorten authentisierte Datensätze und/oder Programme in HSMs laden kann, wobei an die Fertigungsstandorte keinen gesicherten Host benötigen.

# FIG.1

EP 1 967 976 A2

**Beschreibung**

Gebiet der Erfindung

Die Erfindung betrifft ein Verfahren zur authentisierten Übermittlung eines Datensatzes und/oder eines Programms von einem Host an ein Hardware-Sicherheitsmodul$_i$ (HSM$_i$), ein System zur Ausführung eines solchen Verfahrens und ein Lieferungspaket zur Ausführung eines solchen Verfahrens.

Stand der Technik und Hintergrund der Erfindung

Im Vertriebs- und Anwendungsweg von Hardware-Sicherheitsmodulen (HSM) unterscheidet man typischerweise zwischen dem HSM-Hersteller, dem Systemhersteller, welcher die HSMs in seine Systemprodukte einbaut, und den Endkunden dieser Systemprodukte. Ein typisches Beispiel eines solchen Systemproduktes ist eine Frankiermaschine.

Der Vertriebsweg ist dabei dahingehend zu sichern, dass nicht Systemprodukte mit falschen HSMs oder mit HSMs, welche nicht-authorisierte Software enthalten, für Endkunden zur Verfügung gestellt werden können, beispielsweise durch unauthorisierte Dritte.

Hierfür ist es aus der Praxis bekannt, dass ein HSM-Hersteller nach der Herstellung eines HSM dieses individualisiert, beispielsweise indem eine eindeutige bzw. eineindeutige Seriennummer oder dergleichen irreversibel implantiert, i.e. in einem HSM-Speicher eingespeichert wird. Irreversibel meint hierbei, dass nachträglich weder eine Löschung noch eine Änderung möglich ist. Meist wird dabei auch ein kryptographischer Schlüssel in jedem HSM etabliert. Nachdem die elektronischen Schaltkreise des HSM alle Hardware- und Software-Tests durchlaufen und bestanden haben, wird das HSM mit den elektronischen Schaltkreisen versiegelt, indem sein Manipulationsschutz hergestellt oder, sofern schon vorhanden, aktiviert wird. Neben dem Vergiessen sind verschiedenste Maßnahmen hierzu bekannt, wozu lediglich beispielsweise auf die Literaturstellen DE 198 16 572 A1, DE 198 16 571 A1, EP 1 035 516 A2, EP 1 035 517 A2, EP 1 035, 518 A2, EP 1 035 513 A2 sowie DE 200 20 635 U1 verwiesen wird.

Sodann wird in einer Pre-Personalisierungsphase ein Codeverifizier-Schlüssel in das HSM importiert, mit dessen Hilfe das HSM später prüfen kann, ob ein geladenes Applikationsprogramm authorisiert ist oder nicht. Mit diesem Codeverifizier-Schlüssel ausgerüstet wird ein HSM an den Systemprodukt-Hersteller ausgeliefert. Auf separatem Wege erhält der Systemprodukt-Hersteller einen Codesignier-Schlüssel, mit welchem er in der Lage ist, Applikationsprogramme zu signieren. Codeverifizier-Schlüssel und Codesignier-Schlüssel bilden dabei ein Schlüsselpaar mit eineindeutiger Zuordnung und werden typischerweise in einem externen Hostsystem des HSM-Herstellers erzeugt, welches dann den Codeverifizierschlüssel über einen authentisierten Kommunikationskanal in das HSM überträgt. Die Authentisierung des Kommunikationskanals erfolgt üblicherweise durch strikte Zugangskontrollen zum Fertigungs- und Prepersonalisierungsprozess, sowie Überwachung von ein- und ausgehenden Materialströmen und Mitarbei,ter im Wege des Vier-Augen-Prinzips, etc.

In der Personalisierungsphase kann ein Applikationsprogramm in das HSM geladen werden, welches dann später in einer operativen Phase (beim Endkunden) zur Ausführung kommt. Um zu verhindern, dass während der Personalisierungsphase nicht-authorisierte Applikationsprogramme in das HSM geladen werden, verlangt das HSM eine digitale Signatur für jedes Applikationsprogramm. Diese digitale Signatur wird nach Ladung des Applikationsprogramms gegen den Codeverifizier-Schlüssel geprüft, und bei positiver Prüfung wird das Applikationsprogramm akzeptiert und persistent gespeichert. Bei negativer Prüfung erfolgt eine Löschung des neu geladenen Applikationsprogrammes.

Dabei kann die Personalisierungsphase aufgeteilt werden, so dass der Personalisierungsprozess bei der Fertigung der Systemprodukte begonnen (Pre-Initialisierung) und im betreffenden Vertriebszentrum eines Zielmarktes beendet wird (Initialisierung). Im Rahmen der Pre-Initialisierung erfolgt ein Import eines authentisierten Bootladers, Registrierung des HSM in einer PKI des Systemproduktherstellers und Ladung des Applikationsprogrammes für den Endkunden. Die Initialisierung erfolgt dann durch Etablierung und Austausch von kryptographischen Schlüsseln für den Endkunden. Zur Technologie authentisierter Bootlader wird beispielsweise auf die Literaturstelle DE 101 37 505 B4 verwiesen.

Da der Codeverifizier-Schlüssel der "öffentliche" Teil eines asymmetrischen Schlüsselpaares (private/public key) ist, kann er in alle HSM einer Produktion importiert werden, ohne dass dabei die Sicherheit des zugehörigen (geheimen bzw. geheim zu haltenden) Codesignier-Schlüssels gefährdet wird.

Bekannt sind auch HSMs, die mit einer sicheren Kommunikationsschnittstelle zum Hostsystem auf Basis symmetrischer Verschlüsselungssysteme arbeiten. Dabei wird dem Hostsystem ermöglicht, eine sogenannte Sitzung mit dem HSM zu initialisieren und dann Datensätze und/oder Programme in das HSM zu übertragen, und zwar mittels eines Sitzungsschlüssels verschlüsselt. Dazu erhält ein Systemhersteller die kryptographischen Sitzungsschlüssel auf separatem Wege vom HSM-Hersteller. Dabei muss der Sitzungsschlüssel jedoch am Fertigungsstandort vorgehalten werden, und zwar in einer gesicherten Umgebung, beispielsweise im Rahmen eines in dem Host eingebauten HSM mit sicherem Host-Prozessor und sicherem Host-Speicher. Dies ist selbstverständlich an jedem Fertigungsstandort separat erforderlich, was aufwändig in der Einrichtung und im Unterhalt ist.

Allen vorstehenden Varianten ist daher der Nachteil gemeinsam, dass an einem Fertigungsort eines Systemherstellers hohe Sicherheitsmaßnahmen erforderlich sind, um einen Missbrauch von Codes und/oder Datensätzen und/oder Applikationsprogrammen zu verhindern. Die Einrichtung und der Unterhalt solcher hohen Sicherheitsmaßnahmen ist aufwändig, teuer und anfällig.

Der Literaturstelle DE 102 18 835 A1 ist ein Verfahren zum Herstellen eines elektronischen Sicherheitsmoduls entnehmbar, bei welchem eine authentisierte Übermittlung eines Datensatzes von einem Host an das elektronische Sicherheitsmodul erfolgt.

In der Literaturstelle EP 1 150 256 A1 ist ein Verfahren zur sicheren Distribution von Sicherheitsmodulen offenbart. Auch hierbei erfolgt eine authentisierte Übermittlung eines Datensatzes von einem Host an das elektronische Sicherheitsmodul.

Technisches Problem der Erfindung

Der Erfindung liegt daher das technische Problem zu Grunde, ein Verfahren und ein System zur authentisierten Übermittlung eines Datensatzes und/oder eines Programmes von einem Host an ein HSM an einem Fertigungsstandort anzugeben, welches in einer ungesicherten oder nur gering gesicherten Umgebung durchgeführt werden kann und dennoch hohe Sicherheit gegen das Laden unauthorisierter Datensätze und/oder Programme in das zu produzierende bzw. fertigzustellende HSM gewährleistet.

Definitionen

Ein Datensatz umfasst eine Zeichenfolge, welche Informationen codiert. Die Zeichenfolge kann dabei aus Zahlen bestehen oder alphanumerisch sein.

Ein Programm besteht aus Programmzeilen, welche Programmbefehle enthalten. Die Programmbefehle bewirken bei einem Prozessor, auf welchem das Programm läuft, die Ausführung von mathematischen Operationen und ggf. Ausgabe von Datensätzen als Ergebnisse der mathematischen Operationen.

Meist umfassen Programme auch Datensätze, die für die Durchführung der mathematischen Operationen benötigt werden und invariant sind. Variante Datensätze, die für die mathematischen Operationen benötigt werden, werden typischerweise über eine Schnittstelle eingegeben.

Ein Host ist ein Zentralrechner, an welchen verschiedene HSMs gleichzeitig oder nacheinander anschließbar sind, und von welchem Datensätze und/oder Programme über eine Schnittstelle an jedes HSM nach Maßgabe des Host-Programms übermittelt werden.

Ein HSM ist ein Hardware-Sicherheitsmodul, welches typischerweise einen elektronischen Schaltkreis, zumindest eine Schnittstelle und mechanische, elektrische und/oder elektronische Sicherungen gegen einen unauthorisierten Zugriff aufweist. Der elektronische Schaltkreis umfasst in der Regel einen HSM-Prozessor, einen HSM-Speicher sowie Steuerausgänge, welche nach Maßgabe eines im Steuerprozessor prozessierten Applikationsprogrammes angesteuert werden. Der HSM-Speicher besteht oft aus verschiedenen Speichereinheiten oder Speicherbereichen, worin jeweils Programme, Datensätze, Programmzwischenergebnisse, etc. abgespeichert sind.

Ein Wechselcode ist eine Zeichenfolge, die mit jeder Erzeugung des Wechselcodes sich verändert, i.e. aufeinander folgende Wechselcodes weisen verschiedene Zeichenfolgen auf. Typische Beispiele für Wechselcodes sind Zeitcodes, im einfachsten Fall ein in vorgegebenem n-Fachen (n = positive natürliche Zahl) einer Prozessortaktdauer jeweils um eine Zeicheneinheit erhöhte Zeichenfolge, Zufallszeichenfolgen (erzeugbar beispielsweise im HSM-Prozessor mit einem Programm zur Berechnung von Zufallszahlen), oder nach vorgegebenen Algorithmen berechnete lineare oder nicht lineare Zeichenfolgen. Ein Wechselcode kann dabei teilweise aus einem Festcode bestehen, i.e. ein teil der Zeichenfolge ändert sich nicht, während ein anderer Teil der Zeichenfolge mit jeder Erzeugung verändert wird.

Ein Festcode ist eine Zeichenfolge, welche invariant ist, i.e. mit jeder Auslesung aus einem Speicher gleich bleibt.

Ein individueller Code ist ein Code, welcher eineindeutig einem Gerät, beispielsweise einem HSM, einem Programm oder einem Datensatz zugeordnet ist. Verschiedene Geräte, Programme oder Datensätze, auch bei inhaltlicher bzw. baulicher Identität, haben verschiedene zugeordnete individuelle Codes. Ein individueller Code ist gleichsam ein einzigartiger Name für ein Gerät, Programm, oder einen Datensatz. Wesentlich ist die jeweilige Zuordnung. Beispiele für individuelle Festcodes umfassen Seriennummern, Laufnummern, etc..

Ein Algorithmus ist eine Programmcode, welcher eine definierte Rechenregel codiert.

Ein HSM-Hersteller stellt das HSM als eigenständige bauliche Einheit her und vertreibt solche HSMs an Systemhersteller.

Ein Systemhersteller bezieht HSMs von einem HSM-Hersteller, baut diese an einem Fertigungsstandort in ein Systemgerät ein und lädt einen Datensatz und/oder ein Applikationsprogramm (ggf. auch mehrere Datensätze und/oder Applikationsprogramme) in das HSM, wodurch das Systemgerät operabel wird, beispielsweise als Frankiermaschine. Dabei sind Systemherstellerstandort und Fertigungsstandort in der Regel räumlich getrennt, können sogar in verschiedenen Ländern liegen. In der Regel sind einem Systemherstellerstandort sogar mehrere verschiedene Fertigungsstandorte zugeordnet. Dabei erfolgt beim Systemherstellerstandort (neben den logistischen Planungen und dem Versand der HSMs an die verschiedenen Produktionsstandorte) die Generierung, Verwaltung und der Versand von Schlüsseln bzw. Codes und/oder von Datensätzen bzw. Applikationsprogrammen zu einem oder mehreren Fertigungsstandorten.

Eine Schnittstelle ermöglicht den Austausch von Daten und/oder Programmen zwischen zwei Prozessoren bzw. Prozessorsystemen. Jedes Gerät mit einem Prozessorsystem, in welches Daten und/oder Programme ladbar sind, weist eine Schnittstelle auf. Eine Schnittstelle verbindet dabei einen geräteinternen BUS mit einem geräteexternen Übertragungsmedium. Als Übertragungsmedien kommen in Frage Leitungen, draht- oder glasfasergebunden, und drahtlose Übertragungen, wie mittels Funkwellen oder IR.

Eine Transformation eines Codes umfasst eine Umwandlung der Zeichenfolge des Codes in eine hiervon verschiedene Zeichenfolge nach Maßgabe eines vorgegebenen Algorithmus. Eine reverse Transformation wandelt die Zeichenfolge des transformierten Codes wieder in die Zeichenfolge des ursprünglichen Codes zurück, es handelt sich also um einen symmetrisch reversen bzw. inversen Algorithmus zu zur Transformation eingesetzten Algorithmus.

Ein Harwarekonfigurationsparameter $HWP_i$ ist ein Code, welcher individuell für ein $HSM_i$ ist, und welcher dazu dient, den HSM-Typ anzugeben, wozu das $HSM_i$ gehört, beispielsweise unter Angabe von Speichergröße, Sicherheitsgrad, etc..

Ein Authentikationsschlüssel $Authkey_i$ ist ein Code, welcher individuell für das $HSM_i$ ist, und welcher der Verschlüsselung eines Wechselcodes bzw. Entschlüsselung eines verschlüsselten Wechselcodes dient.

Ein Transportkey $TK_i$ ist ein Code, welcher individuell für ein $HSM_i$ ist, und welcher dazu dient, für eine Kommunikation eines $HSM_i$ im Zuge einer Personalisierung einen geheimen Code zur Verfügung zu stellen, und zwar zur Erlangung eines Sitzungsschlüssels.

Ein $MAC_i$ ist ein für ein $HSM_i$ individueller Message Authentication Code, welcher beispielsweise über die Daten des Datensatzes und/oder des Applikationsprogrammes gebildet wird.

Ein zusätzlicher Festcodeanteil ist ein Festcode, welcher individuell für eine $HSM_i$ sein kann oder nicht, und verschieden von den vorstehend beschriebenen Festcodes ist.

Ein Startladeprogramm ist ein Bootprogramm, wie beispielsweise in der Literaturstelle DE 101 37 505 B4 beschrieben.

Ein Applikationsprogramm ist ein Programm, welches in einem Gerät, in welches das HSM eingebaut ist, Prozesse mit üblichen Softwaretechniken ansteuert und/oder protokolliert, wie beispielsweise einen Frankierprozess, ggf. nach Maßgabe von zugelassenen Benutzereingaben.

Ein Schlüsselcode ist ein beliebiger Code, welcher der Verschlüsselung und/oder Entschlüsselung dient. Hierbei kann es sich beispielsweise um einen public key, z.B. mit PKI Zertifikat des Hostsystems, handeln.

Der Begriff der Frankiermaschine ist im weitesten Sinne als eine Vorrichtung zu verstehen, mittels welcher eine Frankierung von Poststücken, wie Briefen, Päckchen, Paketen, und sonstigen versandfähigen Behältnissen, erfolgen kann. Hierunter fallen also auch Postbearbeitungsmaschinen und Computer mit Postbearbeitungsfunktion, beispielsweise PC-Frankierer.

Ein Lieferungspaket bezeichnet ein Gerät mit zugeordneten Datensätzen, Codes, oder Programmen. Datensätze, Codes und/oder Programme können auf einem oder auf verschiedenen Datenträgern, wie optische oder magnetische Datenträger, Chipkarten oder dergleichen, gespeichert sein. Der Begriff der Speicherung auf einem Datenträger umfasst dabei auch das Niederschreiben auf einem Papiersubstrat oder dergleichen. Das Gerät und der bzw. die Datenträger können zu einer Verpackungseinheit vereinigt oder in separaten Verpackungseinheiten eingerichtet und versandt werden. An Stelle eines Versandes eines Datenträgers ist auch eine Übermittlung per Datenfernübertragung, beispielsweise über Internet, möglich, dann tritt an Stelle des Datenträgers eine Informationseinheit.

Grundzüge der Erfindung und bevorzugte Ausführungsformen

Zur Lösung dieses technischen Problems lehrt die Erfindung ein Verfahren zur authentisierten Übermittlung eines Datensatzes und/oder eines Programms von einem Host an ein Hardware-Sicherheitsmodul$_i$ ($HSM_i$) mit den folgenden Verfahrensschritten:

a) an einem Systemherstellerstandort werden für i $HSM_i$, welche jeweils einen HSM-Prozessor, Mittel zur Erzeugung eines Wechselcodes Cw und einen mit dem HSM-Prozessor verbundenen HSM-Speicher enthalten, ein erster HSM-individueller Festcode $Fc1_i$, ein zweiter HSM-individueller Festcode $Fc2_i$, und ein dritter HSM-individueller Festcode $Fc3_i$ bestimmt, wobei der zweite Festcode $Fc2_i$ aus dem ersten Festcode $Fc1_i$ nach einem vorgegebenen Algorithmus berechnet wird,

wobei der dritte Festcode $Fc3_i$ aus dem zweiten Festcode $Fc2_i$ und Daten des Datensatzes und/oder des Programms berechnet wird, und

wobei die Festcodes $Fc1_i$, $Fc2_i$ und $Fc3_i$ alle optional verschieden voneinander sind,

b) an dem Systemherstellerstandort-.werden der erste Festcode $Fc1_i$ und der zweite Festcode $Fc2_i$ oder der vorgegebene Algorithmus in dem HSM-Speicher gespeichert,

c) zumindest eines der $HSM_i$ wird an einen Fertigungsstandort transportiert und der erste Festcode $Fc1_i$, optional der Datensatz und/oder das Programm, sowie der dritte Festcode $Fc3_i$ werden an den Fertigungsstandort übermittelt und in dem Host mit Host-Prozessor und Host-Speicher gespeichert,

d) am Fertigungsstandort werden der HSM-Prozessor und der Host-Prozessor über zumindest eine Schnittstelle miteinander verbunden,

e) der Host-Prozessor sendet an das $HSM_i$ eine Initialisierungsdatenfolge, mittels welcher eine Antwortdatenfolge, optional umfassend eine Identifizierung des $HSM_i$, angefordert wird,

f) der Host-Prozessor koppelt nach Erhalt der Antwortdatenfolge und optional erfolgreicher Identifizierung des $HSM_i$ den zu übermittelnden Datensatz und/oder das Programm mit dem dem $HSM_i$ zugeordneten und gespeicherten dritten Festcode $Fc3_i$ zu einem Übertragungsdatensatz und überträgt den Übertragungsdatensatz an den HSM-Prozessor,

g1) der HSM-Prozessor berechnet mittels des gespeicherten vorgegebenen Algorithmus den zweiten Festcode $Fc2_i$ oder liest diesen aus dem HSM-Speicher (5) aus und vergleicht diesen mit einem aus dem Übertragungsdatensatz berechneten zweiten Festcode $Fc2_i'$, oder

g2) der HSM-Prozessor berechnet mittels des gespeicherten vorgegebenen Algorithmus den zweiten Festcode $Fc2_i$ und hieraus in Verbindung mit dem Übertragungsdatensatz oder dem übermittelten Datensatz und/oder Programm den dritten Festcode $Fc3_i$ und vergleicht diesen mit dem im Übertragungsdatensatz enthaltenen dritten Festcode $Fc3_i'$, und

h) bei Übereinstimmung des zweiten Festcodes $Fc2_i$ mit dem zweiten Festcode $Fc2_i'$ oder des dritten Festcodes $Fc3_i$ mit dem dritten Festcode $Fc3_i'$ erfolgt die Authorisierung und Freigabe des Datensatzes und/oder des Programms zur Aktivierung im $HSM_i$.

Optional können unmittelbar anschließend an die Stufe e) die folgenden Stufen eingefügt sein:

e1) das $HSM_i$ generiert mit den Mitteln zur Erzeugung (4) eines Wechselcodes einen Wechselcode $Cw$, speichert diesen Wechselcode $Cw$ im HSM-Prozessor und sendet diesen Wechselcode $Cw$ über die Schnittstelle an den Host-Prozessor,

e2) der Host-Prozessor transformiert den empfangenen Wechselcode $Cw$ mittels des gespeicherten und dem $HSM_i$ zugeordneten ersten Festcodes $Fc1_i$ in einen transformierten Wechselcode $Cw_t$ und sendet den transformierten Wechselcode $Cw_t$ an den HSM-Prozessor, und

e3) der HSM-Prozessor führt mit dem empfangenen transformierten Wechselcode $Cw_t$ mit dem ersten Festcode $Fc1_i$ eine zur Transformation der Stufe e2) symmetrische reverse Transformation durch und vergleicht den erhaltenen rücktransformierten Wechselcode $Cw_{rt}$ mit dem in Stufe e1) gespeicherten Wechselcode $Cw$ und sendet bei Übereinstimmung eine Bestätigungsdatenfolge an den Host-Prozessor.

Mit der Erfindung wird erreicht, dass an einem Fertigungsstandort für die Vorhaltung des ersten Festcodes $Fc1_i$ und des dritten Festcodes $Fc3_i$ und deren Übertragung an das $HSM_i$ keine besonderen Sicherungsmaßnahmen erforderlich sind. Auf der anderen Seite ist dennoch eine hohe Sicherheit gegen das Laden unauthorisierter Datensätze und/oder Programm gegeben, da es ohne Kenntnis der Algorithmen der Berechnung des zweiten Festcodes $Fc2_i$ aus dem ersten Festcode $Fc1_i$, sowie der Berechnung des dritten Festcodes $Fc3_i$ aus dem zweiten Festcode $Fc2_i$ nicht möglich ist, einen dritten Festcode $Fc3_i$ zu schaffen und mit einem (unauthorisierten) Datensatz oder Programm zu kombinieren, der von dem $HSM_i$ als valide erkannt wird. Diese Algorithmen sind am Fertigungsstandort nicht frei verfügbar, sondern einzig in den $HSM_i$ gespeichert. Im Ergebnis können der erste Festcode $Fc1_i$ und der dritte Festcode Fc3i ohne Sicherheitsmaßnahmen am Fertigungsstandort vorgehalten werden und dennoch können keine unauthorisierten Datensätze oder Programme erfolgreich in ein HSM geladen werden. Es wird eine erhebliche Vereinfachung am Fertigungsstandort erreicht bei Erhalt der notwendigen Sicherheit gegen Ladung unauthorisierter Datensätze und Programme.

Bei negativem Vergleich in einer der Stufen e3) oder g1) bzw. g2) erfolgt ein Abbruch des Ablaufes. Im Falle eines negativen Vergleichs in Stufe e3) erfolgt daher keine Übertragung des Übertragungsdatensatzes. Bei negativem Vergleich in Stufe g1) bzw. g2) erfolgt eine Löschung des übertragenen Datensatzes oder Programms aus dem HSM-Speicher.

Im Kern stellen die Stufen e1) bis e3) eine aus der Netzwerktechnologie bekannte Sequenz "Hello Request, Hello Reply (mit verschlüsseltem Wechselcode Cw), Challenge Request, Challenge Reply" dar. Dabei erfolgt eine Authorisierung des Host gegenüber dem $HSM_i$. Im Rahmen der Erfindung ist es dabei möglich, dass sich das $HSM_i$ auch der Host einen (ggf. anderen) und an das $HSM_i$ sendet, worauf das HSMi den empfangenen Wechselcode mittels des ersten Festcodes $Fc1_i$ verschlüsselt und an den Host zurücksendet, welcher dann wiederum mittels des Festcodes Fc1i eine Rücktransformation durchführt und das Ergebnis mit dem gespeicherten Wechselcode vergleicht. Diese zusätzliche Authorisierung kann beispielsweise zwischen den Stufen e3) und f) eingefügt werden.

Der an das $HSM_i$ übertragene Datensatz kann beispielsweise ein Schlüsselcode sein. Das an das $HSM_i$ übertragene Programm kann ein Startladeprogramm oder ein Applikationsprogramm sein.

Die erfindungsgemäß eingesetzten Festcodes können grundsätzlich beliebiger Natur sein. In der Praxis ist es bevorzugt, wenn der erste Festcode $Fc1_i$ ein Authentikationsschlüssel $Authkey_i$, und wenn i eine Seriennummer des $HSM_i$ oder ein hiermit korrelierter Individualdatensatz ist. Der zweite Festcode $Fc2_i$ kann aus einer $Seriennummer_i$ bzw. i selbst, einem Hardwarekonfigurationsparameter $HWP_i$, $Authkey_i$, einem Transportschlüssel $TK_i$ und optional einem zusätzlichen Festcodeanteil mit einem definierten Algorithmus berechnet werden und so einen $Session Key_i$ bilden:

$$Session\ Key_i = f(Seriennummer_i,\ HWP_i,\ Authkey_i,\ TK_i,\ Festcodeanteil_i),$$

wobei i eine positive natürliche Zahl ist. Die jeweiligen Schlüssel werden seiten des Systemherstellers vom HSM-Hersteller bezogen und dort werden die Berechnungen, wie vorstehend angegeben, durchgeführt.

Dem erfindungsgemäßen Verfahren vorgeschaltet ist die Herstellung des HSMi und dessen Versand an den Systemhersteller zusammen mit den generierten und zugeordneten Codes. Dazu wird vor der Stufe a) zumindest ein $HSM_i$ von dem HSM-Hersteller hergestellt, und wobei von dem HSM-Hersteller dem $HSM_i$ zumindest i sowie der erste Festcode $Fc1_i$ zugeordnet wird. Das $HSM_i$ mit den Informationen zu i und $Fc1_i$ wird dann an den Systemhersteller versandt. Beim HSM-Hersteller kann auch die Zuordnung des dritten Festcodes $Fc3_i$ und dessen Versand erfolgen, dies ist aber nicht zwingend notwendig. Beim HSM-Hersteller werden aber jedenfalls die für das erfindungsgemäße Verfahren notwendigen Algorithmen und Codes in das $HSM_i$ geladen. Im Einzelnen kann von dem HSM-Hersteller auch $HWP_i$ in dem $HSM_i$ gespeichert und $Authkey_i$ und $TK_i$ an den Systemhersteller übermittelt werden.

Der Host kann grundsätzlich beliebig angeordnet sein, da für keine sichere Übertragungsleitung zum HSM benötigt wird. So kann der Host bei dem HSM-Hersteller oder bei dem Systemhersteller angeordnet sein. In der Regel wird es jedoch bevorzugt sein, wenn der Host beim Fertigungsstandort angeordnet ist.

Typischerweise werden der Datensatz und/oder das Programm vor der Stufe i) von einem Applikationsserver zum Host übertragen.

Im Lichte der erfindungsgemäßen Vorteile, wie vorstehend erläutert, kann der Host als Standalone-Host betrieben werden und braucht keine Sicherheitsfunktionalität aufzuweisen. Beispielsweise gesicherte Übertragungsleitungen und/oder Host-eigene HSMs sind daher entbehrlich..

Die Erfindung betrifft auch ein System gemäß Anspruch 13. Zum erfindungsgemäßen System gelten die vorstehenden Ausführungen zum Verfahren, einschließlich der bevorzugten Ausführungsformen analog. Die Erfindung betrifft schließlich ein Lieferungspaket gemäß Anspruch 20.

Im Rahmen der Erfindung ist es bevorzugt, wenn das $HSM_i$ für den Einbau in eine Frankiermaschine bestimmt ist oder einen Teil einer Frankiermaschine bildet.

Im Folgenden wird die Erfindung anhand von Ausführungsbeispielen näher erläutert.

Beispiel 1: Herstellung eines HSM und Übermittlung an einem Systemhersteller

Ein HSM-Hersteller stellt die Hardware für das HSM her und speichert die Software hierin ein. Jedem $HSM_i$ wird eine $Seriennummer_i$ ein $HWP_i$, ein $Authkey_i$ sowie eine $TK_i$ zugeordnet. Die $Seriennummer_i$ und der $HWP_i$ werden in das jeweilige $HSM_i$ eingespeichert.

Das so fertiggestellte $HSM_i$ wird an den Systemhersteller ausgeliefert und dem Systemhersteller werden die

dem HSM$_i$ zugeordneten Authkey$_i$ und TK$_i$ unter Mitteilung der Zuordnung übermittelt.

Beispiel 2: Produktionsvorbereitungen des Systemherstellers und Übermittelungen an einen Fertigungsstandort

Beim Systemhersteller wird für jedes HSM$_i$ ein Session Key$_i$ gemäß der Formel

$$\text{Session Key}_i = f(\text{Seriennummer}_i, \text{ HWP}_i, \text{ Authkey}_i, \text{ TK}_i, \text{ Festcodeanteil}_i),$$

berechnet und entweder im HSM-Speicher gespeichert, oder der vorgegebene Algorithmus hierfür wird in das HSM$_i$ eingespeichert.

Mit dem Session Key$_i$ wird dann unter Verwendung von Daten aus einem am Fertigungsstandort aufzuspielenden Datensatz oder Programm jeweils ein MAC$_i$ berechnet.

Schließlich werden das HSM$_i$, Authkey$_i$, und ggf. der Datensatz oder das Programm, sofern am Fertigungsstandort nicht bereits vorgehalten, an den Fertigungsstandort übermittelt, und zwar unter jeweiliger Zuordnung beispielsweise anhand von i bzw. einer Seriennummer$_i$.

Beispiel 3: Darstellung der Komponenten eines erfindungsgemäßen Systems

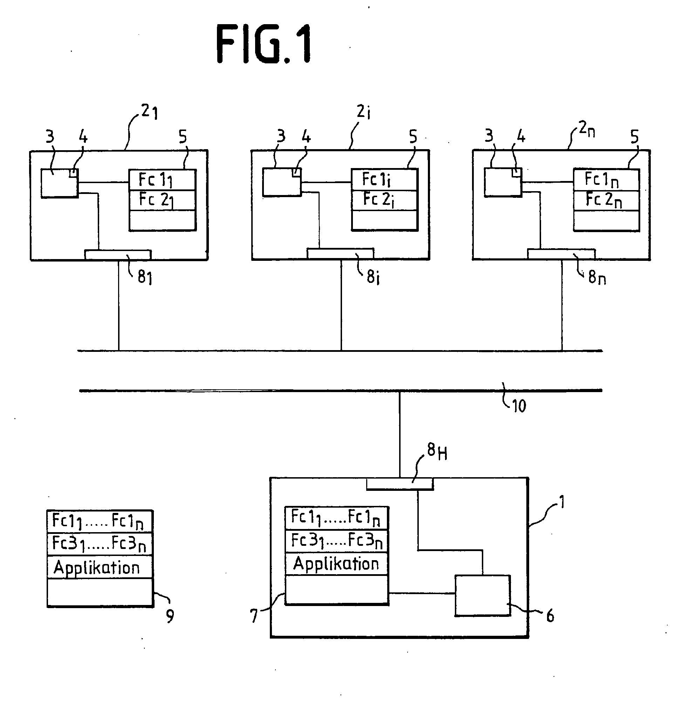

In der Figur 1 erkennt man die Komponenten eines erfindungsgemäßen Systems zur sicheren Übertragung eines Datensatzes und/oder eines Programms in eine Produktionscharge von HSM$_i$ $2_1$, $2_i$, $2_n$. Jedes HSM$_i$ $2_1$, $2_i$, $2_n$ ist mit einem HSM-Prozessor 3, einem HSM-Speicher 5 und Mitteln zur Erzeugung 4 eines Wechselcodes Cw ausgestattet. In jedem HSM-Speicher 5 sind ein erster HSM-individueller Festcode Fc1$_i$ sowie der zweite Festcode Fc1$_i$ gespeichert.

Des Weiteren erkennt man einen Host 1 mit einem Host-Prozessor 6, einem Host-Speicher 7 und übliche Schnittstellen $8_1$, $8_i$, $8_n$, $8_H$ zum Anschluss der HSM-Prozessoren 3 an den Host-Prozessor 6 über einen BUS 10, In dem Host-Speicher 7 sind der Datensatz und/oder das Programm (Applikation), der erste Festcode Fc1$_i$ und ein dritter Festcode Fc3$_i$ gespeichert. Diese Daten wurden zuvor mittels eines Datenträgers 9 zum Host transportiert und hierin eingespeichert.

Der Host-Prozessor 6 ist zur Sendung einer Initialisierungsdatenfolge and den HSM-Prozessor 3 eingerichtet ist. Der HSM-Prozessor 3 ist zur Speicherung und Sendung des erzeugten Wechselcodes Cw an den Host-Prozessor 6 eingerichtet. Der Host-Prozessor 6 ist weiterhin zur Transformation des empfangenen Wechselcodes Cw mit dem ersten Festcode Fc1$_i$ in einen transformierten Wechselcode Cw$_t$ und Rücksendung des transformierten Wechselcodes Cw$_t$ an den HSM-Prozessor 3 eingerichtet ist. Der HSM-Prozessor 3 ist weiterhin zur Rücktransformation des empfangenen transformierten Wechselcodes Cw$_t$ mit dem ersten Festcode Fc1$_i$ in einen rücktransformierten Wechselcode Cw$_{rt}$ und dessen Vergleich mit dem gespeicherten Wechselcode Cw und bei Übereinstimmung zur Sendung einer Bestätigungsdatenfolge an den Host-Prozessor 6 eingerichtet ist. Der Host-Prozessor 6 ist weiterhin nach Empfang der Bestätigungsdatenfolge zur Koppelung des zu übermittelnden Datensatzes und/oder des Programmes mit dem dem HSM$_i$ $2_1$, $2_i$, $2_n$ zugeordneten und gespeicherten dritten Festcode Fc3$_i$ zu einem Übertragungsdatensatz und zur Übertragung des Übertragungsdatensatzes an den HSM-Prozessor 3 eingerichtet ist. Der HSM-Prozessor 3 ist weiterhin zur Bestimmung des zweiten Festcodes Fc2$_i$ mittels des gespeicherten vorgegebenen Algorithmus' oder zu dessen Auslesung aus dem HSM-Speicher 5 und zu dessen Vergleich mit einem aus dem Übertragungsdatensatz berechneten zweiten Festcode Fc2$_i$' eingerichtet ist. Der HSM-Prozessor 3 ist schließlich bei Übereinstimmung des zweiten Festcodes Fc2$_i$ mit dem zweiten Festcode Fc2$_i$' zur Authorisierung und Freigabe des Datensatzes und/oder des Programms zur Aktivierung im HSM$_i$ $2_1$, $2_i$, $2_n$ eingerichtet.

Im Ausführungsbeispiel ist das Programm ein Applikationsprogramm. Der erste Festcode Fc1$_i$ ist ein Authentikationsschlüssel Authkey$_i$. i ist eine Seriennummer des HSM$_i$ $2_1$, $2_i$, $2_n$ oder ein hiermit korrelierter Individualdatensatz. Der zweite Festcode Fc2$_i$ ist aus i, einem Hardwarekonfigurationsparameter HWP$_i$, Authkey$_i$, einem Transportschlüssel TK$_i$ und optional einem zusätzlichen Festcodeanteil mit einem definierten Algorithmus berechenbar.

Der Host 1 ist ein Standalone-Host, am Produktionsstandort angeordnet und weist keine Sicherheitsfunktionalität auf.

Beispiel 4: Endfertigung bzw. Personalisierung am Fertigungsstandort

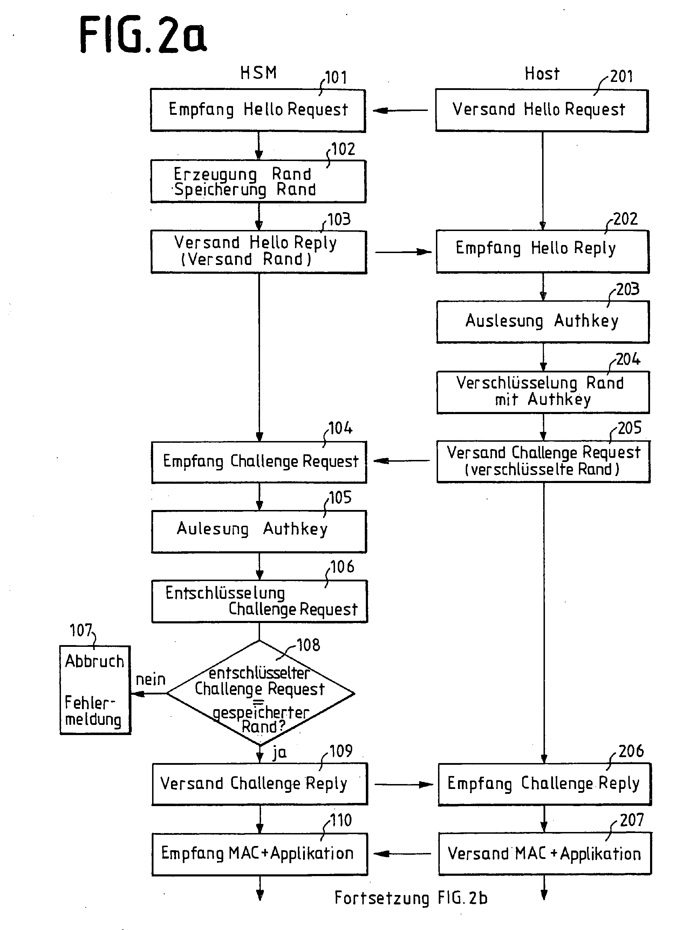

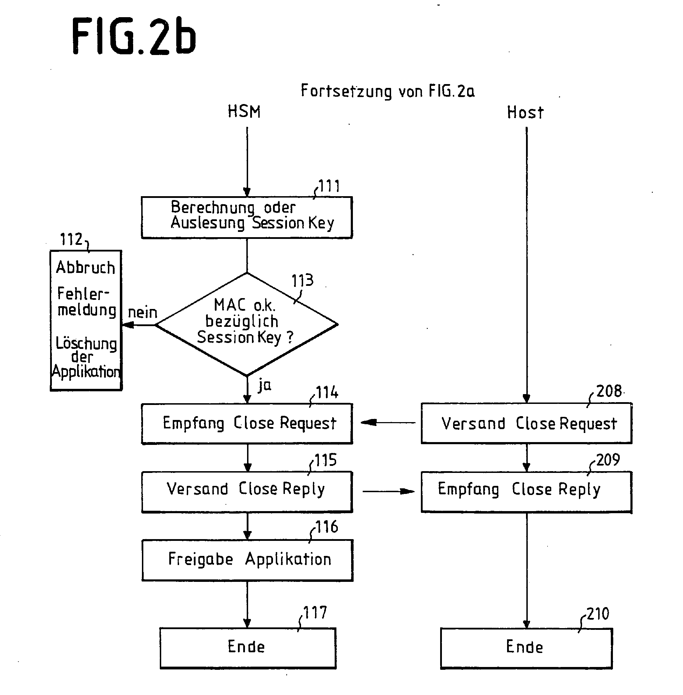

Das System gemäß der Figur 1 ist am Fertigungsstandort angesiedelt und hiermit wird das in der Figur 2 dargestellte Sitzungsprotokoll ausgeführt. Hierzu werden Host 1 und HSM$_i$ $2_1$, $2_i$, $2_n$ zunächst verbunden, und zwar über den BUS 10.

In der Figur 2 sind auf der linken Seite Ablaufschritte bzw. Verfahrensschritte dargelegt, welche ein HSM $2_1$, $2_i$, $2_n$ ausführt und auf der rechten Seite sind Ablaufschritte bzw. Verfahrensschritte dargestellt, die der Host 1 ausführt. Pfeile zwischen der linken und der rechten Seite zeigen eine Datenübertragung über den BUS 10 an.

In einem erste Schritt 201 erzeugt und versendet der Host 1 einen Hello Request. Das HSM $2_1$, $2_i$, $2_n$ empfängt diesen Hello Request in Schritt 101. Dies löst im HSM $2_1$, $2_i$, $2_n$ die Erzeugung einer Zufallszahl (Rand) und deren Speicherung im Schritt 102 aus. Sodann wird in Schritt 103 die Zufallszahl (Rand) als Hello Reply an den Host 1 versandt. Der Host 1 empfängt den Hello Reply in Schritt 202. Dies löst den Schritt 203 aus, in welchem der Host 1 den Authkey ($Fc1_i$) aus dem Host-Speicher 7 ausliest. Sodann führt der Host Prozessor 6 in Schritt 204 eine Verschlüsselung der Zufallszahl (Rand) mittels des Authkey durch und versendet in Schritt 205 die verschlüsselte Zufallszahl (Rand) an das HSM $2_1$, $2_i$, $2_n$ als Challenge Request. Das HSM $2_1$, $2_i$, $2_n$ empfängt den Challenge Request in Stufe 104. In Stufe 105 wird aus dem HSM-Speicher 5 der Authkey. ($Fc1_i$) ausgelesen und in Stufe 106 eine Entschlüsselung des Challenge Request durchgeführt. In Stufe 108 findet ein Vergleich des entschlüsselten Challenge Request mit der im HSM $2_1$, $2_i$, $2_n$ gespeicherten Zufallszahl statt. Bei Nichtübereinstimmung wird Schritt 107 angesteuert, in welchem ein Abbruch des Protokolls und eine Fehlermeldung stattfinden. Bei Übereinstimmung wird Stufe 109 angesteuert, in welcher vom HSM $2_1$, $2_i$, $2_n$ ein Challenge Reply an den Host 1 versandt wird. Der Host empfängt in Stufe 206 den Challenge Reply und steuert die Stufe 207 an, in welcher ein MAC ($Fc3_i$) und die Applikation aus dem Host-Speicher 7 ausgelesen und zu einem Übertragungsdatensatz verknüpft und an das HSM $2_1$, $2_i$, $2_n$ versandt werden. Das HSM $2_1$, $2_i$, $2_n$ empfängt den Übertragungsdatensatz in Stufe 110, liest in Stufe 111 den Session Key ($Fc2_i$) aus dem HSM-Speicher 5 aus und prüft in Stufe 113, ob MAC und Session Key übereinstimmen bzw. miteinander in vorgegebener Weise korrelieren. Verneinendenfalls wird die Stufe 112 angesteuert, in welcher ein Abbruch des Protokolls, eine Fehlermeldung und eine Löschung der Applikation aus Speichern 5 des HSM $2_1$, $2_i$, $2_n$ erfolgt. Bejahendenfalls werden die Stufen 114 und 115 bzw. 208 und 209 angesteuert, welche eine Abschlussroutine für die Kommunikation zwischen Host 1 und HSM $2_1$, $2_i$, $2_n$ darstellen. In Stufe 116 erfolgt schließlich eine Freigabe bzw. Aktivierung der Applikation im HSM $2_1$, $2_i$, $2_n$ da es autorisiert ist, und ein Endkunde kann das Gerät, in welches das HSM $2_1$, $2_i$, $2_n$ eingebaut ist in üblicher Weise gebrauchen. Die Stufen 117 und 210 sind Beendigungsstufen.

**Patentansprüche**

1. Verfahren zur authentisierten Übermittlung eines Datensatzes und/oder eines Programms von einem Host (1) an ein Hardware-Sicherheitsmodul$_i$ (HSM$_i$) ($2_i$) mit den folgenden Verfahrensschritten:

 a) an einem Systemherstellerstandort werden für i HSM$_i$ ($2_i$), welche jeweils einen HSM-Prozessor (3), Mittel zur Erzeugung (4) eines Wechselcodes Cw und einen mit dem HSM-Prozessor (3) verbundenen HSM-Speicher (5) enthalten, ein erster HSM-individueller Festcode $Fc1_i$, ein zweiter HSM-individueller Festcode $Fc2_i$, und ein dritter HSM-individueller Festcode $Fc3_i$ bestimmt,
 wobei der zweite Festcode $Fc2_i$ aus dem ersten Festcode $Fc1_i$ nach einem vorgegebenen Algorithmus berechnet wird,
 wobei der dritte Festcode $Fc3_i$ aus dem zweiten Festcode $Fc2_i$ und Daten des Datensatzes und/oder des Programms berechnet wird, und
 wobei die Festcodes $Fc1_i$, $Fc2_i$ und $Fc3_i$ optional alle verschieden voneinander sind,
 b) an dem Systemherstellerstandort werden der erste Festcode $Fc1_i$ und der zweite Festcode $Fc2_i$ oder der vorgegebene Algorithmus in dem HSM-Speicher (5) gespeichert,
 c) zumindest eines der HSM$_i$ ($2_i$) wird an einen Fertigungsstandort transportiert und der erste Festcode $Fc1_i$, optional der Datensatz und/oder das Programm, sowie der dritte Festcode $Fc3_i$ werden an den Fertigungsstandort übermittelt und in dem Host (1) mit Host-Prozessor (6) und Host-Speicher (7) gespeichert,
 d) am Fertigungsstandort werden der HSM-Prozessor (3) und der Host-Prozessor (6) über zumindest eine Schnittstelle ($8_i$, $8_H$) miteinander verbunden,
 e) der Host-Prozessor (6) sendet an das HSM$_i$ ($2_i$) eine Initialisierungsdatenfolge, mittels welcher eine Antwortdatenfolge, optional umfassend eine Identifizierung des HSM$_i$ ($8_i$), angefordert wird,
 f) der Host-Prozessor (6) koppelt nach Erhalt der Antwortdatenfolge und optional erfolgreicher Identifizierung des HSM$_i$ den zu übermittelnden Datensatz und/oder das Programm mit dem dem HSM$_i$ ($2_i$) zugeordneten und gespeicherten dritten Festcode $Fc3_i$ zu einem Übertragungsdatensatz und überträgt den Übertragungsdatensatz an den HSM-Prozessor (3),
 g1) der HSM-Prozessor (3) berechnet mittels des gespeicherten vorgegebenen Algorithmus den zweiten Festcode $Fc2_i$ oder liest diesen aus dem HSM-Speicher (5) aus und vergleicht diesen mit einem aus dem Übertragungsdatensatz berechneten zweiten Festcode $Fc2_i$', oder
 g2) der HSM-Prozessor (3) berechnet mittels des gespeicherten vorgegebenen Algorithmus den zweiten Fest-

code Fc2$_i$ und hieraus in Verbindung mit dem Übertragungsdatensatz oder dem übermittelten Datensatz und/ oder Programm den dritten Festcode Fc3$_i$ und vergleicht diesen mit dem im Übertragungsdatensatz enthaltenen dritten Festcode Fc3$_i$', und

h) bei Übereinstimmung des zweiten Festcodes Fc2$_i$ mit dem zweiten Festcode Fc2$_i$' oder des dritten Festcodes Fc3$_i$ mit dem dritten Festcode Fc3$_i$' erfolgt die Authorisierung und Freigabe des Datensatzes und/oder des Programms zur Aktivierung im HSM$_i$ (2$_i$).

2.  Verfahren nach Anspruch 1, wobei unmittelbar anschließend an die Stufe e) die folgenden Stufen eingefügt sind:

e1) das HSM$_i$ (2$_i$) generiert mit den Mitteln zur Erzeugung (4) eines Wechselcodes einen Wechselcode Cw, speichert diesen Wechselcode Cw im HSM-Prozessor (3) und sendet diesen Wechselcode Cw über die Schnittstelle (8$_i$, 8$_H$) an den Host-Prozessor (6),

e2) der Host-Prozessor (6) transformiert den empfangenen Wechselcode Cw mittels des gespeicherten und dem HSM$_i$ (2$_i$) zugeordneten ersten Festcodes Fc1$_i$ in einen transformierten Wechselcode Cw$_t$ und sendet den transformierten Wechselcode Cw$_t$ an den HSM-Prozessor (3), und

e3) der HSM-Prozessor (3) führt mit dem empfangenen transformierten Wechselcode Cw$_t$ mit dem ersten Festcode Fc1$_i$ eine zur Transformation der Stufe e2) symmetrische reverse Transformation durch und vergleicht den erhaltenen rücktransformierten Wechselcode Cw$_{rt}$ mit dem in Stufe e1) gespeicherten Wechselcode Cw und sendet bei Übereinstimmung eine Bestätigungsdatenfolge an den Host-Prozessor (6).

3.  Verfahren nach Anspruch 1 oder 2,

wobei der Datensatz ein Schlüsselcode ist, und/oder

wobei das Programm ein Startladeprogramm oder ein Applikationsprogramm ist, und/oder

wobei der erste Festcode Fc1$_i$ ein Authentikationsschlüssel Authkey$_i$ ist und/oder

wobei i eine Seriennummer des HSM$_i$ oder ein hiermit korrelierter Individualdatensatz ist, und/oder

wobei der zweite Festcode Fc2$_i$ aus i, einem Hardwarekonfigurationsparameter HWP$_i$, Authkey$_i$, einem Transportschlüssel TK$_i$ und optional einem zusätzlichen Festcodeanteil mit einem definierten Algorithmus berechnet wird und/oder

wobei vor der Stufe a) zumindest ein HSM$_i$ (2$_i$) von einem HSM-Hersteller hergestellt wird, und wobei von dem HSM-Hersteller dem HSM$_i$ (2$_i$) zumindest i sowie der erste Festcode Fc1$_i$ zugeordnet wird, wobei optional von dem HSM-Hersteller der HWP$_i$ in dem HSM$_i$ (2$_i$) gespeichert und wobei Authkey$_i$ und TK$_i$ an den Systemhersteller übermittelt werden, und/oder

wobei der Host (1) bei dem HSM-Hersteller oder bei dem Systemhersteller angeordnet ist und/oder

wobei der Datensatz und/oder das Programm vor der Stufe i) von einem Applikationsserver zum Host (1) übertragen werden, und/oder

wobei der Host (1) als Standalone-Host betrieben wird und keine Sicherheitsfunktionalität aufweist.

4.  System zur sicheren Übertragung eines Datensatzes und/oder eines Programms in ein HSM$_i$ (2$_i$) mit einem Verfahren nach einem der Ansprüche 1 bis 3,

mit zumindest einem HSM$_i$ (2$_i$) mit einem HSM-Prozessor (3), einem HSM-Speicher (5) und optional Mitteln zur Erzeugung (4) eines Wechselcodes Cw, wobei in dem HSM-Speicher (5) ein erster HSM-individueller Festcode Fc1$_i$ sowie ein vorgegebener Algorithmus zur Berechnung eines zweiten HSM-individuellen Festcodes Fc2$_i$ aus dem ersten Festcode Fc1$_i$ oder der zweite Festcode Fc2$_i$ gespeichert sind,

mit einem Host (1) mit einem Host-Prozessor (6), einem Host-Speicher (7) und einer Schnittstelle (8$_i$, 8$_H$) zum Anschluss des HSM-Prozessors (3) an den Host-Prozessor (6), wobei in dem Host-Speicher (7) der Datensatz und/oder das Programm, der erste Festcode Fc1$_i$ und ein dritter Festcode Fc3$_i$ gespeichert sind,

wobei der Host-Prozessor (6) zur Sendung einer Initialisierungsdatenfolge und den HSM-Prozessor (3) eingerichtet ist, welche eine Identifizierung des HSM$_i$ (2i) auslöst,

wobei optional der HSM-Prozessor (3) zur Speicherung und Sendung des erzeugten Wechselcodes Cw an den Host-Prozessor (6) eingerichtet ist, wobei der Host-Prozessor (6) zur Transformation des empfangenen Wechselcodes Cw mit dem ersten Festcode Fc1$_i$ in einen transformierten Wechselcode Cw$_t$ und Rücksendung des transformierten Wechselcodes Cw$_t$ an den HSM-Prozessor (3) eingerichtet ist, wobei der HSM-Prozessor (3) zur Rücktransformation des empfangenen transformierten Wechselcodes Cw$_t$ mit dem ersten Festcode Fc1$_i$ in einen rücktransformierten Wechselcode Cw$_{rt}$ und dessen Vergleich mit dem gespeicherten Wechselcode Cw und bei Übereinstimmung zur Sendung einer Bestätigungsdatenfolge an den Host-Prozessor (6) eingerichtet ist,

wobei der Host-Prozessor (6) nach Identifizierung des $HSM_i$ ($2_i$) oder Empfang der Bestätigungsdatenfolge zur Koppelung des zu übermittelnden Datensatzes und/oder des Programmes mit dem dem $HSM_i$ ($2_i$) zugeordneten und gespeicherten dritten Festcode $Fc3_i$ zu einem Übertragungsdatensatz und zur Übertragung des Übertragungsdatensatzes an den HSM-Prozessor (3) eingerichtet ist,

wobei der HSM-Prozessor (3) entweder zur Berechnung des zweiten Festcodes $Fc2_i$ mittels des gespeicherten vorgegebenen Algorithmus' oder zu dessen Auslesung aus dem HSM-Speicher (5) und zu dessen Vergleich mit einem aus dem Übertragungsdatensatz berechneten zweiten Festcode $Fc2_i$' eingerichtet ist, oder zur Berechnung des zweiten Festcodes $Fc2_i$ mittels des gespeicherten vorgegebenen Algorithmus' und hieraus in Verbindung mit dem Übertragungsdatensatz oder dem übermittelten Datensatz und/oder Programm zur Berechnung des dritten Festcode $Fc3_i$ und dessen Vergleich mit dem im Übertragungsdatensatz enthaltenen dritten Festcode $Fc3_i$' eingerichtet ist, und

wobei der HSM-Prozessor (3) bei Übereinstimmung des zweiten Festcodes $Fc2_i$ mit dem zweiten Festcode $Fc2_i$' oder des dritten Festcodes $Fc3_i$ mit dem dritten Festcode $Fc3_i$' zur Authorisierung und Freigabe des Datensatzes und/oder des Programms zur Aktivierung im $HSM_i$ ($2_i$) eingerichtet ist.

5. System nach Anspruch 4,

wobei der Datensatz ein Schlüsselcode ist und/oder

wobei das Programm ein Startladeprogramm oder ein Applikationsprogramm ist und/oder

wobei der erste Festcode $Fc1_i$ ein Authentikationsschlüssel $Authkey_i$ ist und/oder

wobei i eine Seriennummer des $HSM_i$ ($2_i$) oder ein hiermit korrelierter Individualdatensatz ist und/oder

wobei der zweite Festcode $Fc2_i$ aus i, einem Hardwarekonfigurationsparameter $HWP_i$, $Authkey_i$, einem Transportschlüssel $TK_i$ und optional einem zusätzlichen Festcodeanteil mit einem definierten Algorithmus berechenbar wird und/oder

wobei der Host (1) ein Standalone-Host ist und keine Sicherheitsfunktionalität aufweist.

6. Lieferungspaket zur Ausführung eines Verfahrens nach einem der Ansprüche 1 bis 3, enthaltend

zumindest ein $HSM_i$ ($2_i$) mit einem HSM-Prozessor (3), einem HSM-Speicher (5) und Mitteln zur Erzeugung (4) eines Wechselcodes Cw, wobei in dem HSM-Speicher (5) ein erster HSM-individueller Festcode $Fc1_i$ sowie ein vorgegebener Algorithmus zur Berechnung eines zweiten HSM-individuellen Festcodes $Fc2_i$ aus dem ersten Festcode $Fc1_i$ oder der zweite Festcode $Fc2_i$ gespeichert sind, wobei der HSM-Prozessor (3) optional zur Speicherung und Sendung des erzeugten Wechselcodes Cw an den Host-Prozessor (6) eingerichtet ist, wobei der HSM-Prozessor (3) optional zur Rücktransformation des empfangenen transformierten Wechselcodes $Cw_t$ mit dem ersten Festcode $Fc1_i$ in einen rücktransformierten Wechselcode $Cw_{rt}$ und dessen Vergleich mit dem gespeicherten Wechselcode Cw und bei Übereinstimmung zur Sendung einer Bestätigungsdatenfolge an den Host-Prozessor (6) eingerichtet ist, wobei der HSM-Prozessor (3) entweder zur Berechnung des zweiten Festcodes $Fc2_i$ mittels des gespeicherten vorgegebenen Algorithmus' oder zu dessen Auslesung aus dem HSM-Speicher (5) und zu dessen Vergleich mit einem aus dem Übertragungsdatensatz berechneten zweiten Festcode $Fc2_i$' oder zur Berechnung des zweiten Festcodes $Fc2_i$ mittels des gespeicherten vorgegebenen Algorithmus' und hieraus in Verbindung mit dem Übertragungsdatensatz oder dem übermittelten Datensatz und/oder Programm zur Berechnung des dritten Festcode $Fc3_i$ und dessen Vergleich mit dem im Übertragungsdatensatz enthaltenen dritten Festcode $Fc3_i$' eingerichtet ist, und wobei der HSM-Prozessor (3) bei Übereinstimmung des zweiten Festcodes $Fc2_i$ mit dem zweiten Festcode $Fc2_i$' oder des dritten Festcodes $Fc3_i$ mit dem zweiten Festcode $Fc3_i$' zur Authorisierung und Freigabe des Datensatzes und/oder des Programms zur Aktivierung im $HSM_i$ ($2_i$) eingerichtet ist,

einen Datenträger (9) oder eine Informationseinheit enthaltend den ersten Festcode $Fc1_i$,

einen Datenträger (9) oder eine Informationseinheit enthaltend den dritten Festcode $Fc3_i$, und

einen Datenträger (9) oder eine Informationseinheit enthaltend den Datensatz und/oder das Applikationsprogramm,

wobei der erste Festcode $Fc1_i$, der dritte Festcode $Fc3_i$ und/oder der Datensatz bzw. das Applikationsprogramm zusammen auf einem Datenträger (9) gespeichert oder zu einer Informationseinheit zusammengefasst oder auf verschiedenen Datenträgern (9) gespeichert oder in verschiedenen Informationseinheiten angeordnet sein können.

7. Verfahren, System oder Lieferungspaket nach einem der Ansprüche 1 bis 6, wobei das $HSM_i$ ($2_i$) für den Einbau in eine Frankiermaschine bestimmt ist oder einen Teil einer Frankiermaschine bildet.

# FIG.1

# FIG.2a

HSM ⟋101              Host ⟋201

| Empfang Hello Request | ⟵ | Versand Hello Request |

⟋102

| Erzeugung Rand Speicherung Rand |

⟋103

| Versand Hello Reply (Versand Rand) | ⟶ | Empfang Hello Reply ⟋202 |

⟋203

| Auslesung Authkey |

⟋204

| Verschlüsselung Rand mit Authkey |

⟋104         ⟋205

| Empfang Challenge Request | ⟵ | Versand Challenge Request (verschlüsselte Rand) |

⟋105

| Aulesung Authkey |

⟋106

| Entschlüsselung Challenge Request |

107⟍

| Abbruch Fehler- meldung |

⟵ nein ⟋108

⟨ entschlüsselter Challenge Request = gespeicherter Rand? ⟩

ja ⟋109        ⟋206

| Versand Challenge Reply | ⟶ | Empfang Challenge Reply |

⟋110         ⟋207

| Empfang MAC+Applikation | ⟵ | Versand MAC+Applikation |

Fortsetzung FIG.2b

# FIG.2b

Fortsetzung von FIG.2a

HSM                                                    Host

111
┌─────────────────────────┐
│ Berechnung oder         │
│ Auslesung Session Key   │
└─────────────────────────┘

112
┌──────────────┐        113
│ Abbruch      │   ╱────────────╲
│              │  ╱   MAC o.k.   ╲
│ Fehler-      │ │   bezüglich    │
│ meldung nein │◄│  Session Key ? │
│              │  ╲               ╱
│ Löschung     │   ╲────────────╱
│ der          │        │ ja
│ Applikation  │
└──────────────┘

114                                   208
┌─────────────────────────┐   ┌─────────────────────────┐
│ Empfang Close Request   │◄──│ Versand Close Request   │
└─────────────────────────┘   └─────────────────────────┘

115                                   209
┌─────────────────────────┐   ┌─────────────────────────┐
│ Versand Close Reply     │──►│ Empfang Close Reply     │
└─────────────────────────┘   └─────────────────────────┘

116
┌─────────────────────────┐
│ Freigabe Applikation    │
└─────────────────────────┘

117                                   210
┌─────────────────────────┐   ┌─────────────────────────┐
│ Ende                    │   │ Ende                    │
└─────────────────────────┘   └─────────────────────────┘

**IN DER BESCHREIBUNG AUFGEFÜHRTE DOKUMENTE**

**In der Beschreibung aufgeführte Patentdokumente**

- DE 19816572 A1
- DE 19816571 A1
- EP 1035516 A2
- EP 1035517 A2
- EP 1035 A
- EP 518 A2
- EP 1035513 A2
- DE 20020635 U1
- DE 10137505 B4
- DE 10218835 A1
- EP 1150256 A1